# EUROPÄISCHE PATENTSCHRIFT

(11) **EP 2 018 312 B1**
(45) Veröffentlichungstag und Bekanntmachung des Hinweises auf die Patenterteilung: **20.01.2010**
(21) Anmeldenummer: 07722434.3
(22) Anmeldetag: 15.05.2007
(51) Int. Cl.: B62D 25/06, B62D 27/02, B62D 29/04

(54) **FAHRZEUG-DACHTEIL MIT WENIGSTENS EINER KUNSTSTOFFSCHICHT UND EINEM DAMIT VERBUNDENEN RAHMEN**
VEHICLE ROOF PART COMPRISING AT LEAST ONE PLASTIC LAYER AND A FRAME CONNECTED THERETO
PARTIE DE TOIT DE VEHICULE COMPRENANT AU MOINS UNE COUCHE DE PLASTIQUE ET UN CADRE LIE A CELLE-CI

(30) Priorität: 15.05.2006 DE 102006022926
(43) Veröffentlichungstag der Anmeldung: 28.01.2009
(73) Patentinhaber: Webasto AG, 82131 Stockdorf (DE)
(72) Erfinder: POLLAK, Martin, 82178 Puchheim (DE); SCHWAIGHOFER, Ralf, 83115 Neubeuern (DE); OERKE, Philipp, 81479 München (DE); LANG, Andreas, 821494 Gröbenzell (DE)
(74) Vertreter: Wiese Konnerth Fischer Patentanwälte Partnerschaft
(86) Internationale Anmeldenummer: PCT/DE2007/000886
(87) Internationale Veröffentlichungsnummer: WO 2007/131494

(56) Entgegenhaltungen:
- DE-A1- 2 929 689
- DE-A1- 10 218 890
- DE-A1- 10 237 322
- DE-U1- 20 121 620

## Beschreibung

Die Erfindung betrifft ein Fahrzeug-Dachteil mit wenigstens einer Kunststoffschicht und einem damit verbundenen Rahmen gemäß dem Oberbegriff des Patentanspruchs 1. Ein solches Dachteil ist aus der DE 102 37322 A1 bekannt.

Ein gattungsgemäßes Fahrzeugdach ist aus der DE 20 2005 012 176 U1 bekannt. Bei diesem wird an der Unterseite eines Dachteils aus Kunststoff eine Trägerschicht aus einem zweiten Kunststoff angeordnet. Diese ist mittels einer Kleberaupe an einem Flansch eines Dachholms angeklebt. Die Höhe der Kleberaupe erlaubt in begrenztem Umfang eine Höheneinstellung des Dachteils gegenüber dem Dachholm. Wenn die Kleberaupe zu hoch ist, neigt sie insbesondere bei höheren Temperaturen zu einem vorzeitigen Fließen und kann zwischen den Bauteilen auftretende seitliche Scherkräfte nicht mehr übertragen. Ähnliches gilt für die in der DE 102 37 322 A1 oder der DE 100 35 912 A1 gezeigten Dachteile, die mit unter den Deckelplatten angeordneten Rahmen durch Kleberaupen verbunden sind.

Der Erfindung liegt die Aufgabe zugrunde, ein Fahrzeug-Dachteil mit wenigstens einer Kunststoffschicht zu schaffen, mittels dem eine verbesserte Übertragung von Schubkräften ermöglicht wird.

Diese Aufgabe wird erfindungsgemäß durch die Merkmale des Patentanspruchs 1 gelöst. Vorteilhafte Ausgestaltungen der Erfindung sind in den Unteransprüchen angegeben.

Die Erfindung sieht im Kern vor, dass an der Unterseite der unteren, dem Rahmen oder benachbarten Bauteil zugewandten Kunststoffschicht des Dachteils wenigstens eine Rippe zur Aufnahme der seitlichen Schubkräfte angeformt ist.

Gemäß einer besonders vorteilhaften Ausführungsform weist die Rippe Mittel zur Übertragung von Schubkräften in zwei zueinander senkrechten Richtungen einer horizontalen Ebene auf.

Die Verbindung in vertikaler Richtung zwischen der Kunststoffschicht des Dachteils und dem benachbarten Bauteil erfolgt vorzugsweise durch eine Kleberaupe, die durch vertikale Rippen an der Kunsstoffschicht zumindest in einem Teil ihrer Höhe von seitlichen Schubkräften freigehalten wird und dadurch insgesamt eine größere Höhe für einen Höhenausgleich annehmen kann.

Nachfolgend wird ein erfindungsgemäßes Fahrzeugdach unter Bezugnahme auf die Zeichnung näher erläutert. Es zeigt:
- Fig. 1: eine schematische perspektivische Ansicht auf ein Fahrzeugdach in geschlossenem Zustand;
- Fig. 2: einen schematischen Teilquerschnitt durch den Randbereich des vorderen Dachteils gemäß der Schnittlinie 11-11;
- Fig. 3: einen schematischen Teillängsschnitt durch den Randbereich des vorderen Dachteils gemäß der Schnittlinie III-III;
- Fig. 4: einen schematischen Teilquerschnitt durch den Randbereich des hinteren Dachteils gemäß der Schnittlinie IV-IV mit einer herkömmlichen massiven unteren Kunststoffschicht,
- Fig. 5: einen schematischen Teilquerschnitt durch den Randbereich des hinteren Dachteils gemäß der Schnittlinie IV-IV mit einer herkömmlichen, mit einem Hohlraum versehenen unteren Kunststoffschicht und
- Fig. 6: einen schematischen Teilquerschnitt durch den Randbereich des hinteren Dachteils gemäß der Schnittlinie IV-IV mit einer erfindungsgemäßen vertikalen Verrippung der unteren Kunststoffschicht.

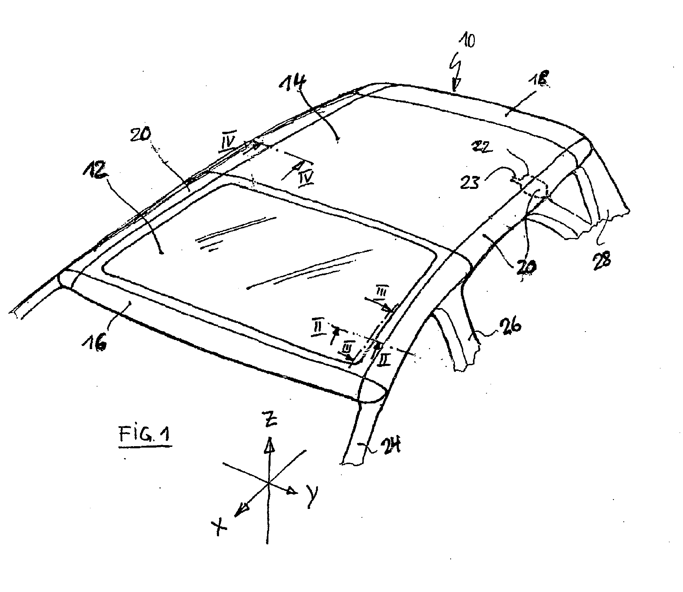

Das in Fig. 1 gezeigte Fahrzeugdach 10 setzt sich zusammen aus einem bewegbaren vorderen Dachteil 12, einem festen hinteren Dachteil 14, einem vorderen Querholm 16, einem hinteren Querholm 18 und zu beiden Seiten angeordneten Seitenholmen 20. Die Seitenholme 20 mit den Flanschen 23 können als separate Bauteile mit der A-Säule 24, der B-Säule 26 und der C- beziehungsweise D-Säule 28 verbunden sein, an denen die Dachteile 12 bzw. 14 fest oder bewegbar gelagert sind. Es ist jedoch ebenso möglich, tragende Holmstrukturen 22 mit Flanschen 23 unmittelbar an den seitlichen Bereichen der Dachteile 12 bzw. 14 mit anzuformen.

Die Dachteile 12 bzw. 14 sind bevorzugt Bestandteile eines RHT (Retractable Hardtop), also eines Festelement-Cabriolets, bei dem die in sich steifen Dachteile 12 bzw. 14 zur Freigabe einer Cabrio-artigen Dachöffnung mittels einer Mechanik in einen Stauraum im hinteren Bereich des Fahrzeugs bewegt werden können.

Die Dachteile 12 bzw. 14 bestehen zumindest in Teilbereichen aus wenigstens zwei Kunststoffschichten 32 bzw. 34 bevorzugt aus einem Polycarbonat (PC). Alternativ kann wenigstens eine der Kunststoffschichten 32, 34 auch aus einem Polycarbonat-Blend, wie Acrylnitril-Butadien-Styrol-Polycarbonat-Blend (ABS-PC), einem PC-Copolymer oder einem anderen PC-kompatiblen Material, wie Polyethylenterephthalat (PET) oder Polymethylmethacrylat (PMMA) bestehen.

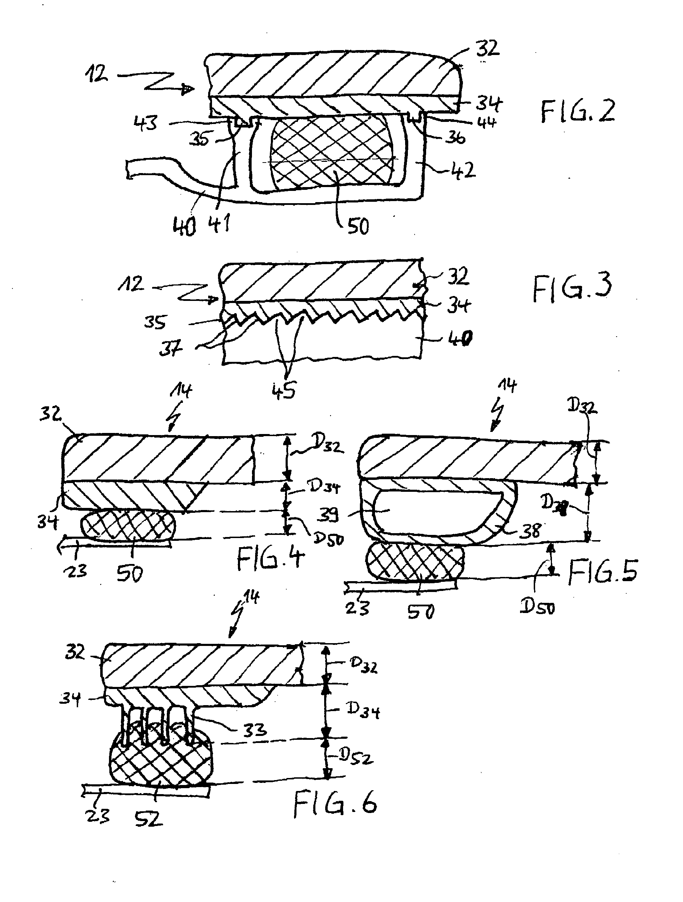

In den Figur 2 und 3 ist nahe des Außenrandes des Dachteils 12 an der Innenseite der ersten vorzugsweise transparenten Kunststoffschicht 32 zu deren Versteifung eine zweite Kunststoffschicht 34 angespritzt. An der Unterseite der zweiten Kunststoffschicht 34 sind in Längsrichtung des Fahrzeugdachs 10 (in X-Richtung im Sinne des in Fig. 1 dargestellten Koordinatensystems) verlaufende Rippen 35 bzw. 36 angeformt. Diese greifen in komplementär geformte Nuten an der Oberseite von längsverlaufenden Rippen 41 bzw. 42 eines unter dem Dachteil 12 angeordneten Rahmens 40 ein und übertragen in Verbindung mit die Rippen 35, 36 seitlich umgebenden Stegen 43 bzw. 44 alle horizontalen Schubkräfte in Y-Richtung. Wie in Fig. 3 gezeigt, sind an der Unterseite der Rippen 35, 36 zusätzlich mehrere in Längsrichtung des Fahrzeugdachs (X-Richtung) verlaufende sägezahnförmige formschlüssige Verbindungselemente 37 angeformt, die im Eingriff mit am Grund der Nuten in den Rippen 41 bzw. 42 angeordneten komplementären formschlüssigen Verbindungselementen 45 für eine Übertragung aller horizontalen Schubkräfte in X-Richtung sorgen. Die die vertikale Verbindung (in Z-Richtung) zwischen dem Dachteil 12 und demRahmen 40 herstellende Kleberaupe 50 ist dadurch von allen horizontalen Schub- bzw. Scherkräften befreit. Es ist prinzipiell auch möglich, die vertikale Verbindung statt durch die Kleberaupe 50 durch Nieten, Schrauben oder dergleichen herzustellen. Auch in diesem Falle dienen die an der Kunststoffschicht angeformten Rippen 35, 36 und Verbindungselemente 37 zur Entlastung dieser Verbindung von Scherkräften.

In den Figuren 4 bis 6 ist die Anbindung des festen hinteren Dachteils 14 an einem Flansch 23 eines Seitenholms 20 gezeigt. Das Dachteil 14 besteht aus einer oberen Kunststoffschicht 32 aus transparentem Polycarbonat und einer in deren Randbereich zu deren Versteifung darunter angeordneten unteren Kunststoffschicht 34 aus schwarzem Polycarbonat. Unterhalb der unteren Kunststoffschicht 34 ist eine Kleberaupe 50 angeordnet, die die Klebeverbindung zum Flansch 23 herstellt und gleichzeitig für einen vertikalen Höhenausgleich des hinteren Dachteils 14 zum Flansch 23 sorgt. Die Höhe D₃₂ der oberen Kunststoffschicht 32 beträgt etwa 4,5 mm, die Höhe D₃₄ der unteren Kunststoffschicht 34 beträgt etwa 2,5 mm und die Höhe der Klebstoffraupe 50 beträgt etwa 5 mm. Die gesamte Höhe von der oberen Deckfläche der oberen Kunststoffschicht 32 bis zur oberen Fläche des Flansches 23 beträgt somit etwa 12 mm. Wenn aus bestimmten Gründen die Gesamthöhe des Schichtenaufbaus der oberen Kunststoffschicht 32, der unteren Kunststoffschicht 34 und der Klebstoffraupe 50 vergrößert werden soll, so stößt dies auf folgende Grenzen: die Dicke der Kunststoffschichten 32 und 34 kann nicht beliebig vergrößert werden. Dies würde zum einen zu einem steigenden Gewicht, Materialverbrauch und erhöhten Kosten führen und würde bei einer größeren Dicke der unteren Kunststoffschicht 34 auch zu noch stärkerem Schwund und damit verbundenen Einfallstellen an der Oberseite der oberen Kunststoffschicht 32 führen. Einen Ausweg bietet im begrenzten Umfangs eine Erhöhung der Klebstoffraupe 50; doch auch hier sind wegen des zunehmenden fließens der Klebstoffraupe 50 mit zunehmender Höhe bei auftretenden Scherkräften, insbesondere bei höheren Temperaturen, enge Grenzen gesetzt. Eine andere Lösung ist die in Figur 5 dargestellte Lösung, bei der in eine untere Kunststoffschicht 38 ein Hohlraum 39 eingebettet ist. Die Höhe D₃₂ der oberen Kunststoffschicht 32 ist gegenüber Figur 4 unverändert bei 4,5 mm. Die Höhe D₃₈ der unteren Kunststoffschicht 38 konnte durch den Hohlraum 39 auf 10 mm vergrößert werden. Die Höhe der Klebstoffraupe 50 ist ebenfalls gegenüber Figur 4 unverändert bei etwa 5 mm. Die Gesamthöhe des Schichtenaufbaus in der Figur 5 konnte durch die Vergrößerung der mit dem Hohlraum 39 versehenen unteren Kunststoffschicht 38 auf insgesamt etwa 19,5 mm gesteigert werden, Der Hohlraum 39 muss jedoch bei dieser Lösung aufwändig im Gasinnendruck-verfahren erzeugt werden, wodurch die Herstellung der unteren Kunststoffschicht 38 sehr teuer wird.

Erfindungsgemäß sind gemäß Figur 6 als Alternative zur Fig. 5 an der Unterseite der unteren Kunststoffschicht 34 mehrere vertikale, voneinander beabstandete Rippen 33 ausgebildet, in deren Zwischenräume sich eine in ihrer Höhe in Z-Richtung vergrößerte Kleberaupe 52 mit ihrem oberen Teil einbettet. Nachdem der zwischen den Rippen 33 liegende Teil der Klebstoffraupe 52 durch die Rippen 33 von seitlichen Scherkräften entlastet wird, muss nur der untere Teil der Klebstoffraupe 52 mit der mit D₅₂ bezeichneten Höhe Scherkräfte übertragen. Die Gesamthöhe der Schichtenaufbaus kann hier mit einfachen Mitteln ebenfalls auf die bei der Ausführungsform gemäß Figur 5 erreichten 19,5 mm gesteigert werden, da der obere Teil der Kleberaupe 52 mit einem Anteil von etwa 5 mm Höhe zwischen den Rippen 33 gegen seitliche Scherkräfte gehalten wird.

Auch wenn vorstehend von Fahrzeugdachteilen gesprochen wird, ist für den Fachmann klar, dass sich die Erfindung auch für andere außenliegende Karosserieteile, wie Türen oder Heckklappe von Fahrzeugen hervorragend eignet.

### Bezugszeichenliste

- 10: Fahrzeugdach
- 12: Dachteil
- 14: Dachteil
- 16: (vorderer) Querholm
- 18: (hinterer) Querholm
- 20: Seitenholm
- 22: Holmstruktur
- 23: Flansch (an 20)
- 24: A-Säule
- 26: B-Säule
- 28: C-Säule
- 32: (äußere) Kunststoffschicht
- 33: Rippen (an 34)
- 34: (innere) Kunststoffschicht
- 35: Rippe (an 34)
- 36: Rippe (an 34)
- 37: Verbindungselemente
- 38: (innere) Kunststoffschicht
- 39: Hohlraum
- 40: Rahmen
- 41: Rippe (an 40)
- 42: Rippe (an 40)
- 43: Steg
- 44: Steg
- 45: Verbindungselement
- 50: Klebstoffraupe
- 52: Klebstoffraupe
- D₃₂: Dicke (von 32)
- D₃₄: Dicke (von 34)
- D₃₈: Dicke (von 38)
- D₅₀: Höhe (von 50)
- D₅₂: Höhe (von 52)

## Patentansprüche

1. Fahrzeug-Dachteil (12, 14) mit wenigstens einer Kunststoffschicht (32; 34, 38) und mit einem mit der Kunststoffschicht (34, 38) verbundenen Rahmen bzw. Flansch (40; 23), wobei an der Unterseite der unteren, dem Rahmen (40) oder benachbarten Bauteil (23) zugewandten Kunststoffschicht (34, 38) des Dachteils (12, 14) wenigstens eine Rippe (35, 36; 33) zur Aufnahme der seitlichen Schubkräfte angeformt ist, **dadurch gekennzeichnet, dass** die Verbindung in vertikalen Richtung zwischen der Kunststoffschicht (34, 38) des Dachteils (12, 14) und den Rahmen oder dem benachbarten Bauteil (23) durch eine Kleberaupe (50, 52) erfolgt, die durch die vertikalen Rippen (35, 36; 33) an der Kunststoffschicht (32; 34, 38) zumindest in einem Teil ihrer Höhe von seitlichen Schubkräften freigehalten wird und **dadurch** insgesamt eine größere Höhe für einen Höhenausgleich annehmen kann.

2. Fahrzeug-Dachteil nach Anspruch 1, **dadurch gekennzeichnet, dass** die Rippe (35, 36; 33) Mittel (37) zur Übertragung von Schubkräften in zwei zueinander senkrechten Richtungen (X- und Y-Richtung) einer horizontalen Ebene aufweist.

3. Fahrzeug-Dachteil nach Anspruch 1, **dadurch gekennzeichnet, dass** die Verbindung zwischen der Kunststoffschicht (34; 38) des Dachteils (12, 14) und dem benachbarten Rahmen (40) beziehungsweise dem benachbarten Flansch (23) in vertikaler Richtung durch eine Kleberaupe (50, 52) erfolgt.

4. Fahrzeug-Dachteil nach Anspruch 3, **dadurch gekennzeichnet, dass** an der Unterseite der Kunststoffschicht (34) mehrere voneinander beabstandete vertikale Rippen (33) angeordnet sind, in deren Zwischenräume sich die Klebstoffraupe (52) zumindest teilweise einbettet.

5. Fahrzeug-Dachteil nach einem der vorhergehenden Ansprüche, **dadurch gekennzeichnet, dass** das Dachteil (12, 14) auch tragende Strukturen, wie Seitenholme (20) und/oder Querholme (16, 18) umfaßt.

6. Fahrzeug-Dachteil nach einem der vorhergehenden Ansprüche, **dadurch gekennzeichnet, dass** das Dachteil (12, 14) einen Teil eines Festelement-Cabriolets bildet.

## Claims

1. Vehicle roof part (12, 14) comprising at least one plastic layer (32; 34, 38) and a frame or flange (40; 23) connected to the plastic layer (34, 38), wherein at least one rib (35, 36; 33) for absorbing the lateral shearing forces is moulded to the underside of the lower plastic layer (34, 38) of the roof part (12, 14), said layer facing the frame (40) or adjacent component (23), **characterized in that** the plastic layer (34, 38) of the roof part (12, 14) and the frame or the adjacent component (23) are connected in the vertical direction by an adhesive bead (50, 52) which is kept free at least over part of the height thereof from lateral shearing forces by means of the vertical ribs (35, 36; 33) on the plastic layer (32; 34, 38) and, as a result, can assume a greater height overall for height equalization.

2. Vehicle roof part according to Claim 1, **characterized in that** the rib (35, 36; 33) has means (37) for transmitting shearing forces in two mutually perpendicular directions (X and Y direction) of a horizontal plane.

3. Vehicle roof part according to Claim 1, **characterized in that** the plastic layer (34; 38) of the roof part (12, 14) and the adjacent frame (40) or the adjacent flange (23) are connected in the vertical direction by an adhesive bead (50, 52).

4. Vehicle roof part according to Claim 3, **characterized in that** a plurality of spaced-apart vertical ribs (33) are arranged on the underside of the plastic layer (34), and the adhesive bead (52) is at least partially embedded in the gaps between said ribs.

5. Vehicle roof part according to one of the preceding claims, **characterized in that** the roof part (12, 14) also comprises supporting structures, such as side beams (20) and/or cross beams (16, 18).

6. Vehicle roof part according to one of the preceding claims, **characterized in that** the roof part (12, 14) forms part of a fixed element cabriolet.

## Revendications

1. Partie de toit de véhicule (12, 14) avec au moins une couche de plastique (32 ; 34, 38) et avec un cadre et/ou une bride (40 ; 23) reliés à la couche de plastique (34, 38), au moins une nervure (35, 36 ; 33) étant formée au niveau du côté inférieur de la couche de plastique (34, 38) de la partie de toit (12, 14) orientée sous le cadre (40) ou à côté de l'élément (23) pour recevoir les forces de poussée, **caractérisée en ce que** la jonction dans la direction verticale entre la couche de plastique (34, 38) de la partie de toit (12, 14) et le cadre ou l'élément (23) voisin se produit à travers un cordon de colle (50, 52) qui est protégé au moins sur une partie de sa hauteur des forces de poussée latérales du fait des rainures (35, 36 ; 33) verticales présentes au niveau de la couche de plastique (32 ; 34, 38) et peut ainsi prendre dans l'ensemble une hauteur importante permettant une compensation de la hauteur.

2. Partie de toit de véhicule selon la revendication 1, **caractérisée en ce que** la nervure (35, 36 ; 33) comporte des moyens (37) de transmission de forces de poussée dans deux directions perpendiculaires l'une par rapport à l'autre (direction X et Y) d'un plan horizontal.

3. Partie de toit de véhicule selon la revendication 1, **caractérisée en ce que** la jonction entre la couche de plastique (34 ; 38) de la partie de toit (12, 14) et le cadre (40) connexe et/ou la bride (23) connexe se produit dans la direction verticale à l'aide d'un cordon de colle (50, 52).

4. Partie de toit de véhicule selon la revendication 3, **caractérisé en ce que** plusieurs nervures (33) verticales séparées les unes des autres sont disposées au niveau du côté inférieur de la couche de plastique (34), dans les interstices desquelles le cordon de colle (52) se loge au moins en partie.

5. Partie de toit de véhicule selon l'une quelconque des revendications précédentes, **caractérisé en ce que** la partie de toit (12, 14) comprend également des structures portantes, telles que des montants latéraux (20) et/ou des montants transversaux (16, 18).

6. Partie de toit de véhicule selon l'une quelconque des revendications précédentes, **caractérisé en ce que** la partie de toit (12, 14) forme une partie d'un élément fixe de cabriolet.
